# EUROPEAN PATENT APPLICATION

(11) **EP 3 546 851 A1**
(43) Date of publication of application: **02.10.2019**
(21) Application number: 17874008.0
(22) Date of filing: 21.11.2017
(51) Int. Cl.: F25B 1/00

(54) **REFRIGERATING DEVICE**

(30) Priority: 24.11.2016 JP 2016227659
(71) Applicant: Daikin Industries, Ltd., Osaka-shi, Osaka 530-8323 (JP)
(72) Inventor: SAKAE, Satoru, Osaka 530-8323 (JP); KONDOU, Azuma, Osaka 530-8323 (JP)
(74) Representative: Hoffmann Eitle
(86) International application number: PCT/JP2017/041855
(87) International publication number: WO 2018/097138

(57) **Abstract**

A refrigeration apparatus excellent in workability, maintainability, and economy is provided. The refrigeration apparatus (100) includes: a usage-side expansion valve (31) whose opening degree is changed in response to a change in a flow rate or a pressure of a refrigerant on the upstream side; a first expansion valve (15); and a controller (50). The controller (50) exerts, in an oil recovery operation, an oil recovery first control on the first expansion valve (15) to attain a first opening degree (an opening degree of increasing an opening degree of the usage-side expansion valve (31) in relation to a reduction in the flow rate or the pressure of the refrigerant passing through the first expansion valve (15)), to reduce the flow rate or the pressure of the refrigerant passing through the first expansion valve (15). The controller (50) exerts an oil recovery second control following the oil recovery first control on the first expansion valve (15) to attain a second opening degree (an opening degree that allows a liquid refrigerant to flow into a usage-side heat exchanger (32) before the opening degree of the usage-side expansion valve (31) is reduced in relation to an increase in the flow rate or the pressure of the refrigerant passing through the first expansion valve (15)), to increase the flow rate or the pressure of the refrigerant passing through the first expansion valve (15).

## Description

### TECHNICAL FIELD

The present invention relates to a refrigeration apparatus.

### BACKGROUND ART

Conventionally, a refrigeration apparatus including a refrigerant circuit performing a refrigeration cycle is known. The refrigerant circuit includes: a heat source unit including a compressor and a heat-source-side heat exchanger; and a service unit including a usage-side heat exchanger and a mechanical expansion valve. Some of such refrigeration apparatuses, for example, as a refrigeration apparatus disclosed in Patent Literature 1 (JP 2009-257759 A), perform at a predetermined timing an oil recovery operation of opening and closing an on-off valve disposed upstream to a mechanical expansion valve in the service unit to send a liquid refrigerant to the usage-side heat exchanger and to recover a refrigerating machine oil built up in the usage-side heat exchanger.

### SUMMARY OF THE INVENTION

### <Technical Problem>

In the case where a controller for controlling actuators is disposed outside the service unit, the refrigeration apparatus which performs the oil recovery operation in the manner disclosed in Patent Literature 1 necessitates an electric wire for electrically connecting between the on-off valve in the service unit and the controller in installation or maintenance. For the troubles and costs in works and maintenance relating to the electric wire, such refrigeration apparatus is poor in workability, maintainability, and economy.

An object of the present invention is to provide a refrigeration apparatus which is excellent in workability, maintainability, and economy.

### <Solution to Problem>

A refrigeration apparatus according to a first aspect of the present invention is a refrigeration apparatus configured to carry out a refrigeration cycle through a refrigerant circuit including a heat source unit and a service unit. The refrigeration apparatus includes a mechanical expansion valve, an electric valve, and a controller. The heat source unit includes a compressor and a heat-source-side heat exchanger. The compressor is configured to compress a refrigerant. The heat-source-side heat exchanger functions as a condenser for a refrigerant. The service unit includes a usage-side heat exchanger. The usage-side heat exchanger functions as an evaporator for a refrigerant. The mechanical expansion valve is disposed on a refrigerant flow upstream side relative to the usage-side heat exchanger. The mechanical expansion valve is configured to decompress a refrigerant passing through the mechanical expansion valve in accordance with an opening degree of the mechanical expansion valve. The electric valve is disposed on the refrigerant flow upstream side relative to the mechanical expansion valve. The electric valve is configured to adjust a flow rate or a pressure of a refrigerant passing through the electric valve in accordance with an opening degree of the electric valve. The controller is configured to control the operation of actuators. The actuators include the electric valve. The mechanical expansion valve has its opening degree changed in response to an increase and a reduction in a flow rate or a pressure of a refrigerant flowing on an upstream side relative to the mechanical expansion valve. The controller executes an oil recovery operation at a predetermined timing. The oil recovery operation includes a first control and a second control. The first control and the second control are control for recovering a refrigerating machine oil built up in the service unit to the compressor. In the first control, the controller sets the opening degree of the electric valve to a predetermined first opening degree to reduce the flow rate or the pressure of the refrigerant passing through the electric valve. The first opening degree is an opening degree that increases the opening degree of the mechanical expansion valve in relation to a reduction in the flow rate or the pressure of the refrigerant passing through the electric valve. In the second control, after the first control, the controller sets the opening degree of the electric valve to a second opening degree to increase the flow rate or the pressure of the refrigerant passing through the electric valve. The second opening degree is an opening degree that allows, before the opening degree of the mechanical expansion valve is reduced in relation to an increase in the flow rate or the pressure of the refrigerant passing through the electric valve, a liquid refrigerant to flow into the usage-side heat exchanger.

In the refrigeration apparatus according to the first aspect of the present invention, in the oil recovery operation, the controller sets the opening degree of the electric valve to the first opening degree to reduce the flow rate or the pressure of the refrigerant passing through the electric valve, and thereafter sets the opening degree of the electric valve to the second opening degree to increase the flow rate or the pressure of the refrigerant passing through the electric valve. Thus, in the oil recovery operation, under the first control, in relation to a reduction in the flow rate or the pressure of the refrigerant passing through the electric valve, the opening degree of the mechanical expansion valve is increased. Thereafter, under the second control, before the opening degree of the mechanical expansion valve is reduced in relation to an increase in the flow rate or the pressure of the refrigerant passing through the electric valve, a liquid refrigerant is allowed to flow into the usage-side heat exchanger. As a result, the liquid refrigerant flowing into the usage-side heat exchanger is compatibilized with a refrigerating machine oil built up in the usage-side heat exchanger and is delivered toward the heat source unit side. Thus, the refrigerating machine oil is recovered to the compressor.

That is, it is possible to carry out the oil recovery operation of recovering a refrigerating machine oil in the service unit to the compressor without the necessity of disposing an on-off valve for the oil recovery operation in the service unit (or in a refrigerant flow path downstream to the heat source unit and upstream to the mechanical expansion valve, the same holds true for the following). In other words, in performing the oil recovery operation through the refrigerant circuit including the mechanical expansion valve upstream to the usage-side heat exchanger, an on-off valve disposed upstream to the mechanical expansion valve can be dispensed with. Hence, the refrigeration apparatus can dispense with an electric wire for electrically connecting between the controller and the on-off valve in installation or maintenance and accordingly save any troubles and costs in works and maintenance relating to the electric wire. Hence, the refrigeration apparatus is excellent in workability, maintainability, and economy.

Note that, while the "refrigerant" as used herein is not limited, it may be a HFC refrigerant such as R410A or R32, for example.

The refrigeration apparatus according to a second aspect of the present invention is the refrigeration apparatus according to the first aspect, in which the controller executes the first control, and executes the second control after a lapse of a predetermined time from execution of the first control. As used herein, the predetermined time is a time that is required for the mechanical expansion valve to have its opening degree increased in response to a reduction in the flow rate or the pressure of the refrigerant passing through the electric valve by the first control.

Thus, after the opening degree of the mechanical expansion valve is increased in relation to the first control being executed, the opening degree of the electric valve is increased by the second control, whereby a liquid refrigerant by a flow rate suitable for recovering a refrigerating machine oil flows into the usage-side heat exchanger. As a result, it is possible to carry out the oil recovery operation without the necessity of disposing an on-off valve for the oil recovery operation in the service unit. Thus, any electric wire for electrically connecting between the controller and the on-off valve in installation or maintenance can be dispensed with, and accordingly, the refrigeration apparatus can save any troubles and costs in works and maintenance relating to the electric wire.

The refrigeration apparatus according to a third aspect of the present invention is the refrigeration apparatus according to the first or second aspect, in which the mechanical expansion valve includes a feeler bulb. The feeler bulb is disposed on a refrigerant flow downstream side relative to the usage-side heat exchanger. The mechanical expansion valve has its opening degree changed in response to a temperature detected by the feeler bulb.

Thus, using the characteristic of the mechanical expansion valve including the feeler bulb, a liquid refrigerant is sent to the usage-side heat exchanger to recover a refrigerating machine oil. That is, the opening degree of the mechanical expansion valve is not immediately changed in response to a change in the flow rate of a refrigerant on the upstream side. Instead, the opening degree is changed by a delay corresponding to a response time in response to a change in the flow rate of the refrigerant on the upstream side (that is, a change in the opening degree of the electric valve). In other words, the mechanical expansion valve is characterized by its low-speed responsivity. By virtue of this characteristic, when the second control is executed following the first control, the opening degree of the mechanical expansion valve is not immediately reduced. Hence, after the electric valve is set to the second opening degree under the second control and until the mechanical expansion valve has its opening degree reduced in response thereto, a liquid refrigerant is allowed to flow in by a flow rate suitable for recovering a refrigerating machine oil to the usage-side heat exchanger.

The refrigeration apparatus according to a fourth aspect of the present invention is the refrigeration apparatus according to any one of the first to third aspects, in which the electric valve is disposed in the heat source unit. This eliminates the necessity of providing an electric wire for connecting between the heat source unit and the service unit which are generally disposed spaced apart from each other. This particularly minimizes works and costs relating to installation or maintenance.

The refrigeration apparatus according to a fifth aspect of the present invention is the refrigeration apparatus according to any one of the first to fourth aspects, in which the controller is disposed at the heat source unit and not electrically connected to any element disposed at the service unit. This eliminates the necessity of providing an electric wire for connecting between the heat source unit and the service unit which are generally disposed spaced apart from each other. This particularly minimizes works and costs relating to installation or maintenance.

The refrigeration apparatus according to a sixth aspect of the present invention is the refrigeration apparatus according to any one of the first to fifth aspects. The refrigerant circuit includes a plurality of the service units. Thus, even in the case where a plurality of service units are installed (that is, in the case where electric wires are required for connecting between the heat source unit and the service units, which involves particularly complicated installation works or maintenance works), the refrigeration apparatus can dispense with any electric wires which are required by an on-off valve for the oil recovery operation installed in each of the service units. This particularly minimizes works and costs relating to installation or maintenance.

### <Advantageous Effects of Invention>

Without the necessity of disposing an on-off valve for an oil recovery operation in the service unit, the refrigeration apparatus according to the first aspect of the present invention carries out the oil recovery operation of recovering a refrigerating machine oil in the service unit to the compressor. In other words, the mechanical expansion valve performing an oil recovery operation in the refrigerant circuit disposed upstream to the usage-side heat exchanger does not require an on-off valve disposed upstream to the mechanical expansion valve. Hence, the refrigeration apparatus can dispense with an electric wire electrically connecting between the controller and an on-off valve in installation or maintenance and, accordingly, the refrigeration apparatus can save any troubles and costs in works and maintenance relating to the electric wire. Thus, the refrigeration apparatus is excellent in workability, maintainability, and economy.

The refrigeration apparatus according to the second aspect of the present invention can dispense with an electric wire for electrically connecting between the controller and an on-off valve in installation or maintenance and, accordingly, the refrigeration apparatus can save any troubles and costs in works and maintenance relating to the electric wire.

In the refrigeration apparatus according to the third aspect of the present invention, using the characteristic of the mechanical expansion valve including the feeler bulb, a liquid refrigerant is sent to the usage-side heat exchanger to recover the refrigerating machine oil.

The refrigeration apparatus according to the fourth or fifth aspect of the present invention can dispense with an electric wire for connecting between the heat source unit and the service unit which are generally disposed spaced apart from each other. This particularly minimizes works and costs relating to installation or maintenance.

The refrigeration apparatus according to the sixth aspect of the present invention can dispense with an electric wire which is required for an on-off valve for an oil recovery operation in each of the service units, even in the case where a plurality of service units are provided. This particularly minimizes works and costs relating to installation or maintenance.

### BRIEF DESCRIPTION OF THE DRAWINGS

FIG. 1 is a schematic configuration diagram of a refrigeration apparatus according to one embodiment of the present invention.
FIG. 2 is a block diagram schematically showing a schematic configuration of a controller and units connected to the controller.
FIG. 3 is a flowchart showing an exemplary flow of processes at the controller.

### DESCRIPTION OF EMBODIMENTS

In the following, with reference to the drawings, a description will be given of a refrigeration apparatus 100 according to an embodiment of the present invention. Note that, the following embodiment is merely a specific example of the present invention and does not limit the technical scope of the present invention. Any changes can be made as appropriate within a range not deviating from the spirit of the invention.

### (1) Refrigeration apparatus 100

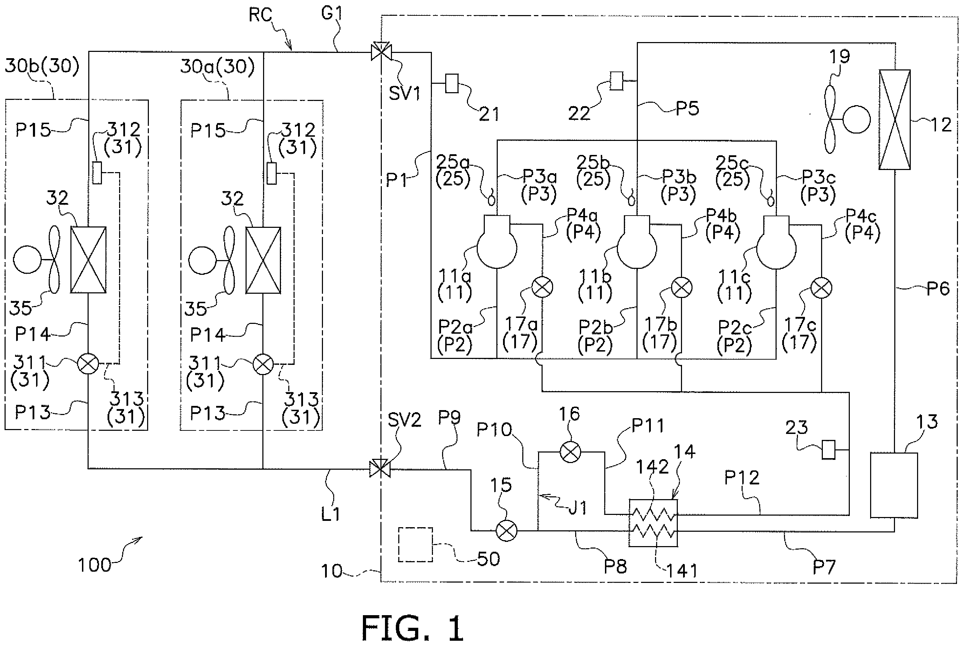

FIG. 1 is a schematic configuration diagram of the refrigeration apparatus 100 according to an embodiment of the present invention. The refrigeration apparatus 100 is configured to cool, by a vapor compression refrigeration cycle, the inside of a low-temperature warehouse, the inside of a showcase at a shop, the usage-side space (the target space) formed in a transfer container or the like. The refrigeration apparatus 100 mainly includes a heat source unit 10, a plurality of (two in the present embodiment) service units 30 (30a, 30b), and a controller 50 controlling the operation of the refrigeration apparatus 100.

In the refrigeration apparatus 100, a refrigerant circuit RC is formed by one heat source unit 10 and the service units 30 being connected to each other via a gas-side connection pipe G1 and a liquid-side connection pipe L1. The refrigeration apparatus 100 carries out a refrigeration cycle of subjecting a refrigerant enclosed in the refrigerant circuit RC to compression, cooling or condensation, decompression, and heating or evaporation, and thereafter again compression. The refrigerant enclosed in the refrigerant circuit RC is, for example, an HFC refrigerant such as R32 or R410A.

### (1-1) Heat source unit 10

### (1-1-1) Circuit elements disposed at heat source unit 10

The heat source unit 10 is connected to the service units 30 via the gas-side connection pipe G1 and the liquid-side connection pipe L1 to form part of the refrigerant circuit RC. The heat source unit 10 mainly includes, as circuit elements forming the refrigerant circuit RC, a plurality of (in the present embodiment, three) compressors 11 (a first compressor 11a, a second compressor 11b, a third compressor 11c), a heat-source-side heat exchanger 12, a receiver 13, a subcooling heat exchanger 14, a first expansion valve 15, a second expansion valve 16, injection valves 17 (a first injection valve 17a, a second injection valve 17b, a third injection valve 17c) as many as the compressors 11 (in the present embodiment, three), a gas-side shutoff valve SV1, and a liquid-side shutoff valve SV2.

The compressors 11 take in and compress a low-pressure refrigerant in a refrigeration cycle, and discharge the compressed refrigerant as a high-pressure refrigerant. The compressors 11 are each, for example, a scroll-type compressor, and each have a closed configuration in which a compression element (not shown) is rotated as being linked to a compressor motor (not shown) in a casing. In the present embodiment, the first compressor 11a, the second compressor 11b, and the third compressor 11c are each a "variable-capacity compressor" whose operating capacity is variable, that is, which has, in operation, the number of revolutions of the compressor motor controlled as appropriate by an inverter. Alternatively, the second compressor 11b and the third compressor 11c are each a "constant-capacity compressor" whose operating capacity is constant, that is, the number of revolutions of the compressor motor in operation is constant. The first compressor 11a, the second compressor 11b, and the third compressor 11c are disposed in parallel to one another.

Note that, while the refrigerating machine oil (the lubricant of the compressors 11) is not specified, it may be, for example, an ester oil having an ester bond, a carbonate oil, a polyalkylene glycol oil (PAG) having an ether bond, or a polyvinyl ether oil.

The heat-source-side heat exchanger 12 is a heat exchanger that functions as a radiator or a condenser for the high-pressure refrigerant in the refrigeration cycle. The heat-source-side heat exchanger 12 includes a heat transfer tube (not shown) through which a refrigerant flows, and is configured to allow the refrigerant in the heat transfer tube and an air flow generated by the heat-source-side fan 19 (described later) to exchange heat with each other.

The receiver 13 is a container that temporarily stores the refrigerant flowed out from the heat-source-side heat exchanger 12. In the receiver 13, a refrigerant reservoir space is formed. The refrigerant reservoir space has the capacity corresponding to the amount of the refrigerant enclosed in the refrigerant circuit RC.

The subcooling heat exchanger 14 is, for example, a double pipe heat exchanger. The subcooling heat exchanger 14 is provided with two refrigerant flow paths (a first flow path 141 and a second flow path 142). The first flow path 141 is a path through which a refrigerant flowed out from the receiver 13 passes. The second flow path 142 is a flow path through which an intermediate-pressure refrigerant having passed through the first flow path 141 and thereafter decompressed by the second expansion valve 16 passes. The subcooling heat exchanger 14 is configured to allow a refrigerant in the first flow path 141 and a refrigerant in the second flow path 142 to exchange heat with each other.

The first expansion valve 15 (corresponding to the "electric valve" in the claims) is an electric valve whose opening degree is controllable. In accordance with the opening degree of the first expansion valve 15, the refrigerant passing therethrough is decompressed, or the flow rate of the refrigerant passing therethrough is increased or reduced. The first expansion valve 15 decompresses a high-pressure liquid refrigerant having passed through the first flow path 141 of the subcooling heat exchanger 14 to provide a low-pressure gas-liquid two-phase refrigerant. The first expansion valve 15 is disposed on the upstream side in the liquid-side connection pipe L1 extending to the service units 30, and adjusts the pressure and the flow rate of the refrigerant sent to the service units 30 via the liquid-side connection pipe L1.

The second expansion valve 16 is an electric valve whose opening degree is controllable. In accordance with the opening degree of the second expansion valve 16, the refrigerant passing therethrough is decompressed, or the flow rate of the refrigerant passing therethrough is increased or reduced. The second expansion valve 16 decompresses a high-pressure liquid refrigerant having passed through the first flow path 141 of the subcooling heat exchanger 14 to provide an intermediate-pressure gas-liquid two-phase refrigerant or liquid refrigerant (an intermediate-pressure refrigerant). The second expansion valve 16 is disposed on the refrigerant flow upstream side in the refrigerant pipe (a twelfth pipe P12 which will be described later) upstream to the injection valve 17.

The injection valves 17 are electric expansion valves whose opening degree is controllable. In accordance with the opening degree of the injection valves 17, the refrigerant passing therethrough is decompressed, or the flow rate of the refrigerant passing therethrough is increased or reduced. The injection valves 17 have their respective one ends connected to corresponding injection pipes (fourth pipes P4 which will be described later) of the compressors 11, and adjust the flow rate of the intermediate-pressure refrigerant passing through. Here, the first injection valve 17a corresponds to the first compressor 11a and a fourth pipe P4a (described later). The second injection valve 17b corresponds to the second compressor 11b and a fourth pipe P4b (described later). The third injection valve 17c corresponds to the third compressor 11c and a fourth pipe P4c (described later).

The gas-side shutoff valve SV1 is a manual valve connected to one end of the gas-side connection pipe G1. The liquid-side shutoff valve SV2 is a manual valve connected to one end of the liquid-side connection pipe L1.

### (1-1-2) Refrigerant pipe disposed at heat source unit 10

The heat source unit 10 includes a plurality of refrigerant pipes connecting between the circuit elements. Specifically, the heat source unit 10 includes a first pipe P1, second pipes P2 (P2a, P2b, P2c), third pipes P3 (P3a, P3b, P3c), and fourth pipes P4 (P4a, P4b, P4c) as many as (three) the compressors 11, and a fifth pipe P5 to a twelfth pipe P12.

The first pipe P1 connects between one end of the gas-side shutoff valve SV1 and individual one ends of the second pipes P2 (intake pipes).

Each of the second pipes P2 corresponds to any of the compressors 11 and is connected to the intake port of the corresponding compressor 11. Each second pipe P2 functions as an intake pipe through which a low-pressure refrigerant flowing into the corresponding compressor 11 flows. The second pipe P2a corresponds to the first compressor 11a. The second pipe P2b corresponds to the second compressor 11b. The second pipe P2c corresponds to the third compressor 11c.

Each of the third pipes P3 corresponds to any of the compressors 11 and is connected to a discharge port of the corresponding compressor 11. Each third pipe P3 functions as a discharge pipe through which a high-pressure refrigerant discharged from the corresponding compressor 11 flows. The third pipe P3a corresponds to the first compressor 11a. The third pipe P3b corresponds to the second compressor 11b. The third pipe P3c corresponds to the third compressor 11c.

Each of the fourth pipes P4 corresponds to any of the compressors 11 and is connected to an injection port of the corresponding compressor 11. Each fourth pipe P4 functions as an injection pipe that allows an intermediate-pressure refrigerant to flow into a compression chamber of the corresponding compressor 11. The fourth pipe P4a corresponds to the first compressor 11a. The fourth pipe P4b corresponds to the second compressor 11b. The fourth pipe P4c corresponds to the third compressor 11c.

The fifth pipe P5 connects between one ends of the third pipes P3 and the gas side of the heat-source-side heat exchanger 12.

The sixth pipe P6 connects between the liquid side of the heat-source-side heat exchanger 12 and a refrigerant inflow port of the receiver 13.

The seventh pipe P7 connects between a refrigerant outflow port of the receiver 13 and one end of the first flow path 141 of the subcooling heat exchanger 14.

The eighth pipe P8 connects between other end of the first flow path 141 of the subcooling heat exchanger 14 and one end of the first expansion valve 15.

The ninth pipe P9 connects between other end of the first expansion valve 15 and one end of the liquid-side shutoff valve SV2.

The tenth pipe P10 extends from a point between the opposite ends of the eighth pipe P8 and is connected to one end of the second expansion valve 16.

The eleventh pipe P11 connects between other end of the second expansion valve 16 and one end of the second flow path 142 of the subcooling heat exchanger 14.

The twelfth pipe P12 connects between other end of the second flow path 142 of the subcooling heat exchanger 14 and individual other ends of the injection valves 17. In more detail, the twelfth pipe P12 has its one end connected to the second flow path 142, and its other end branched in three ways and individually connected to the injection valves 17.

Note that, in the refrigerant circuit RC, the tenth pipe P10, the second expansion valve 16, the eleventh pipe P11, the second flow path 142 of the subcooling heat exchanger 14, the twelfth pipe P12, the injection valves 17, and the fourth pipes P4 form an injection line J1. The injection line J1 is a refrigerant flow path for allowing part of the refrigerant flowing through the eighth pipe P8 to branch and flow (be injected) into the compressors 11.

### (1-1-3) Other elements disposed at heat source unit 10

The heat source unit 10 includes a heat-source-side fan 19 that generates an air flow that flows from the outside of the heat source unit 10 into the heat source unit 10, passes through the heat-source-side heat exchanger 12, and then flows to the outside from the heat source unit 10. The heat-source-side fan 19 is a fan for supplying the heat-source-side heat exchanger 12 with air as the cooling source for a refrigerant flowing through the heat-source-side heat exchanger 12. The heat-source-side fan 19 is, for example, a propeller fan or a sirocco fan, and rotates as being linked with a heat-source-side fan motor (not shown).

The heat source unit 10 further includes various types of sensors such as a low-pressure side pressure sensor 21, a high-pressure side pressure sensor 22, an intermediate pressure sensor 23, and a plurality of discharge temperature sensors 25 (a first discharge temperature sensor 25a, a second discharge temperature sensor 25b, a third discharge temperature sensor 25c).

The low-pressure side pressure sensor 21 is disposed at the first pipe PI (a low-pressure-side refrigerant pipe) on the refrigerant flow upstream side relative to the intake pipes (P2a, P2b, P2c) of the compressors 11. The low-pressure side pressure sensor 21 detects a low-pressure-side pressure LP which is the pressure of the refrigerant passing through the first pipe P1 (that is, the low-pressure refrigerant on the intake side of the compressors 11).

The high-pressure side pressure sensor 22 is disposed at the fifth pipe P5 on the refrigerant flow downstream side relative to the discharge pipes (P3a, P3b, P3c) of the compressors 11. The high-pressure side pressure sensor 22 detects a high-pressure-side pressure HP which is the pressure of the refrigerant passing through the fifth pipe P5 (that is, the high-pressure refrigerant on the discharge side of the compressors 11).

The intermediate pressure sensor 23 is disposed at the twelfth pipe P12 (an upstream side common pipe) on the refrigerant flow upstream side relative to the injection pipes (P4a, P4b, P4c) of the compressors 11. The intermediate pressure sensor 23 detects an intermediate pressure MP which is the pressure of the refrigerant passing through the twelfth pipe P12 (that is, the intermediate-pressure refrigerant flowing into the injection valves 17).

The discharge temperature sensors 25 are disposed at the discharge pipes (P3a, P3b, or P3c) of corresponding ones of the compressors 11 and detect the temperature of a high-pressure refrigerant discharged from the corresponding ones of the compressors 11 (a discharged refrigerant temperature HT). The first discharge temperature sensor 25a corresponds to the first compressor 11a. The second discharge temperature sensor 25b corresponds to the second compressor 11b. The third discharge temperature sensor 25c corresponds to the third compressor 11c.

### (1-2) Service units 30

The service units 30 are connected to the heat source unit 10 via the gas-side connection pipe G1 and the liquid-side connection pipe L1, and form part of the refrigerant circuit RC. In the present embodiment, to one heat source unit 10, two service units 30 (30a, 30b) are connected. The service units 30 are connected in parallel to each other.

The service units 30 each mainly include, as circuit elements forming the refrigerant circuit RC, a usage-side expansion valve 31 and a usage-side heat exchanger 32.

### (1-2-1) Usage-side expansion valve 31

The usage-side expansion valve 31 is a throttling mechanism that functions as means for decompressing (means for expanding) a refrigerant sent from the heat source unit 10 (corresponding to the "mechanical expansion valve" in the claims). In accordance with its opening degree, the usage-side expansion valve 31 decompresses the refrigerant that passes therethrough. The usage-side expansion valve 31 is a thermostatic expansion valve that includes a valve body 311 formed of a valve element, a diaphragm and the like, a feeler bulb 312 having enclosed therein a refrigerant similar to that flowing through the refrigerant circuit RC, and a capillary tube 313 establishing communication between the valve body 311 and the feeler bulb 312. The usage-side expansion valve 31 may be a known general valve as the one disclosed in JP H10-184982 A, for example. Details of the usage-side expansion valve 31 will be given later.

### (1-2-2) Usage-side heat exchanger 32

The usage-side heat exchanger 32 is a heat exchanger that functions as an evaporator for a low-pressure refrigerant in the refrigeration cycle, to cool the air in the usage-side space. The usage-side heat exchanger 32 includes a heat transfer tube (not shown) through which a refrigerant flows, and is configured to allow the refrigerant in the heat transfer tube and an air flow generated by a usage-side fan 35 (described later) to exchange heat with each other.

### (1-2-3) Refrigerant pipes disposed at service units 30

The service units 30 each include a plurality of refrigerant pipes connecting between the circuit elements. Specifically, each service unit 30 includes a thirteenth pipe P13, a fourteenth pipe P14, and a fifteenth pipe P15.

The thirteenth pipe P13 connects between other end of the liquid-side connection pipe L1 and one end of the usage-side expansion valve 31. Note that, other end of the liquid-side connection pipe L1 branches in accordance with the number of the service units 30, to connect to respective thirteenth pipes P13 of the service units 30.

The fourteenth pipe P14 connects between other end of the usage-side expansion valve 31 and a liquid-side gate of the usage-side heat exchanger 32.

The fifteenth pipe P15 connects between a gas-side gate of the usage-side heat exchanger 32 and other end of the gas-side connection pipe G1. Note that, other end of the gas-side connection pipe G1 branches in accordance with the number of the service units 30, to connect to respective fifteenth pipes P15 of the service units 30.

### (1-2-4) Other elements disposed at service units 30

The service units 30 each include a usage-side fan 35 that generates an air flow passing through the usage-side heat exchanger 32. The usage-side fan 35 is a fan for supplying the usage-side heat exchanger 32 with air as the heating source for a refrigerant flowing through the usage-side heat exchanger 32. The usage-side fan 35 is, for example, a centrifugal fan or a sirocco fan, and rotates as being linked to a usage-side fan motor (not shown). The usage-side fan 35 is electrically connected to an independent power source (a commercial power source, a storage battery or the like), and operates by being supplied with power.

### (1-3) Controller 50

The controller 50 is a control unit configured to control the operation state of the refrigeration apparatus 100 by controlling the operation of the actuators included in the refrigeration apparatus 100. The controller 50 includes a microcomputer which includes a CPU, a memory and the like. In the present embodiment, the controller 50 is disposed at the heat source unit 10. The controller 50 is electrically connected to the actuators included in the refrigeration apparatus 100, to exchange signals via a predetermined interface. The controller 50 is further electrically connected to various types of sensors included in the refrigeration apparatus 100, to receive signals corresponding to detection results as appropriate. Details of the controller 50 will be given later.

### (2) Flow of refrigerant in refrigerant circuit RC in cooling operation

In the following, a description will be given of the flow of the refrigerant in the refrigerant circuit RC in operation. In the refrigeration apparatus 100, in operation, in accordance with the required cooling load in the service units 30, the variable-capacity compressor out of the compressors 11 has its capacity controlled, and the constant-capacity compressor performs a rated operation. Specifically, the number of the compressors 11 in operation and the operating capacity of the variable-capacity compressor are controlled so as to satisfy respective target values of the low-pressure-side pressure LP, the high-pressure-side pressure HP, and/or the intermediate pressure MP, which target values are set in accordance with the required cooling load in the service units 30. Thus, a cooling operation (a refrigeration cycle operation) is carried out in which the refrigerant enclosed in the refrigerant circuit RC mainly circulates, in sequence, any of the compressors 11 in operation, the heat-source-side heat exchanger 12, the receiver 13, the subcooling heat exchanger 14 (the first flow path 141), the first expansion valve 15, the usage-side expansion valve 31, and the usage-side heat exchanger 32.

In the cooling operation, a refrigerant is taken into the compressor 11 in operating via the intake pipe (P2a, P2b, or P2c) to be compressed, and then discharged as a high-pressure refrigerant. Here, the low pressure in the refrigeration cycle is the low-pressure-side pressure LP detected by the low-pressure side pressure sensor 21. The high pressure is the high-pressure-side pressure HP detected by the high-pressure side pressure sensor 22. The intermediate pressure is the intermediate pressure MP detected by the intermediate pressure sensor 23.

Each of the gas refrigerant discharged from the compressors 11 flows through corresponding ones of discharge pipes (P3a, P3b, P3c), to merge with each other at the fifth pipe P5 and flows into the gas-side gate of the heat-source-side heat exchanger 12. Note that, in each of the operating compressors 11 in operation, an intermediate-pressure refrigerant is injected into the compression chamber via the injection pipe (the fourth pipe P4), so as to control the temperature of the discharged high-pressure refrigerant to attain the target value.

The gas refrigerant flowing into the gas-side gate of the heat-source-side heat exchanger 12 exchanges, in the heat-source-side heat exchanger 12, heat with air supplied by the heat-source-side fan 19. Thus, the gas refrigerant radiates heat, condenses, becomes a liquid refrigerant or a gas-liquid two-phase refrigerant of a high pressure, and then flows out from the liquid-side gate of the heat-source-side heat exchanger 12. The refrigerant flowed out from the liquid-side gate of the heat-source-side heat exchanger 12 flows into the refrigerant inflow port of the receiver 13 via the sixth pipe P6. The refrigerant flowed into the receiver 13 is temporarily stored at the receiver 13 as a saturated liquid refrigerant, and then flows out from the refrigerant outflow port of the receiver 13.

The liquid refrigerant flowed out from an outflow port of the receiver 13 passes through the seventh pipe P7 to flow into the first flow path 141 of the subcooling heat exchanger 14. The liquid refrigerant flowing into the first flow path 141 of the subcooling heat exchanger 14 exchanges heat with a refrigerant flowing through the second flow path 142 in the subcooling heat exchanger 14 to be further cooled. Thus, the liquid refrigerant becomes a subcooled liquid refrigerant and is discharged from the subcooling heat exchanger 14.

The subcooled liquid refrigerant flowed out from the subcooling heat exchanger 14 flows through the eighth pipe P8. The refrigerant flowing through the eighth pipe P8 branches into two flows. In the two flows of the refrigerant branched from the eighth pipe P8, one flow flows into the first expansion valve 15. The refrigerant flowing into the first expansion valve 15 is decompressed in accordance with the opening degree of the first expansion valve 15, to become a low-pressure gas-liquid two-phase refrigerant. The gas-liquid two-phase refrigerant having passed through the first expansion valve 15 passes through the ninth pipe P9 and the liquid-side shutoff valve SV2, and is discharged from the heat source unit 10.

On the other hand, in the flow of the refrigerant branched from the eighth pipe P8, other flow flows into the injection line J1. The refrigerant flowing into the injection line J1 passes through the tenth pipe P10 to flow into the second expansion valve 16. The refrigerant flowing into the second expansion valve 16 is decompressed in accordance with the opening degree of the second expansion valve 16, to become a liquid refrigerant or a gas-liquid two-phase refrigerant of an intermediate pressure. The refrigerant having passed through the second expansion valve 16 flows through the eleventh pipe P11 to flow into the second flow path 142 of the subcooling heat exchanger 14. Note that, the flow rate and the pressure of the refrigerant flowing through the injection line J1 fluctuate mainly on the basis of the opening degree of the second expansion valve 16, the opening degree of the injection valves 17, the frequency of the compressors 11 in operation, and the like.

The liquid refrigerant flowing into the second flow path 142 of the subcooling heat exchanger 14 exchanges heat with the refrigerant flowing through the first flow path 141 in the subcooling heat exchanger 14 thereby heated, to become a gas-liquid two-phase refrigerant or a gas refrigerant of an intermediate pressure, and flows out from the subcooling heat exchanger 14. The gas-liquid two-phase refrigerant or the gas refrigerant of an intermediate pressure flowed out from the subcooling heat exchanger 14 flows through the twelfth pipe P12. Note that, the flow rate and the pressure of the refrigerant flowing through the second flow path 142 of the subcooling heat exchanger 14 and the twelfth pipe P12 increase or reduce in accordance with the opening degree of the second expansion valve 16.

The refrigerant flowing through the twelfth pipe P12 branches into three flows, which flows respectively flow into the injection valves 17. The refrigerant flowed into the injection valves 17 is decompressed or has its flow rate adjusted in accordance with the opening degree of the injection valves 17, and flows through the injection pipes (the fourth pipes P4) to be injected into the compression chamber of corresponding ones of the compressors 11. Note that, this injection is performed for the purpose of controlling the temperature of the refrigerant discharged from the compressors 11 to attain the target value.

The low-pressure two-phase refrigerant flowed out from the heat source unit 10 passes through the liquid-side connection pipe L1 to flow into the operating ones of the service units 30. The refrigerant flowed into each service unit 30 passes through the thirteenth pipe P13 to flow into the valve body 311 of the usage-side expansion valve 31, and is decompressed or has its flow rate adjusted in accordance with the opening degree of the valve body 311. Note that, the opening degree of the valve body 311 increases or reduces in accordance with the degree of superheating of a refrigerant in the fifteenth pipe P15 where the feeler bulb 312 is disposed. The refrigerant having passed through the valve body 311 of the usage-side expansion valve 31 flows through the fourteenth pipe P14 to flow into the liquid-side gate of the usage-side heat exchanger 32.

The refrigerant flowed into the liquid-side gate of the usage-side heat exchanger 32 exchanges heat with air supplied by the usage-side fan 35 in the usage-side heat exchanger 32 thereby evaporated, to become a low-pressure gas refrigerant and flows out from the gas-side gate of the usage-side heat exchanger 32. The gas refrigerant flowed out from the gas-side gate of the usage-side heat exchanger 32 flows through the fifteenth pipe P15 and flows out from the service unit 30.

The refrigerant flowed out from each service unit 30 flows through the gas-side connection pipe G1 and the gas-side shutoff valve SV1 to flow into the heat source unit 10. The refrigerant flowing into the heat source unit 10 flows through the first pipe P1 and the second pipe P2, and again taken into the operating ones of the compressors 11.

### (3) Details of usage-side expansion valve 31

In the usage-side expansion valve 31, the valve body 311 is disposed on the liquid-side gate side (the refrigerant flow upstream side) relative to the usage-side heat exchanger 32, and the feeler bulb 312 is disposed on the gas-side gate side (the refrigerant flow downstream side) relative to the usage-side heat exchanger 32. In other words, the usage-side expansion valve 31 is disposed on the refrigerant flow downstream side relative to the first expansion valve 15.

The state of the refrigerant in the feeler bulb 312 changes in accordance with the detected temperature at the feeler bulb 312 (in the present embodiment, the temperature of the refrigerant flowing out from the gas-side gate of the usage-side heat exchanger 32). The valve body 311 and the feeler bulb 312 communicate with each other via the capillary tube 313. A diaphragm in the valve body 311 actuates in accordance with the change in the state of the refrigerant in the feeler bulb 312. This determines the opening degree of the valve element. Note that, the valve body 311 includes therein a spring that biases the valve element. The biasing force of the spring is adjustable by an adjust screw.

When the flow rate of the refrigerant flowing into the service unit 30 reduces, the flow rate of the refrigerant passing through the valve body 311 reduces. In relation thereto, the degree of superheating at the usage-side heat exchanger 32 increases. In response thereto, the opening degree of the valve body 311 is increased. Here, the flow rate of the refrigerant flowing into the service unit 30 reduces in response to a reduction in the flow rate of the refrigerant passing through the first expansion valve 15. That is, by the opening degree of the first expansion valve 15 being reduced, the flow rate of the refrigerant flowing into the service unit 30 reduces. In relation thereto, the degree of superheating at the usage-side heat exchanger 32 increases and the opening degree of the valve body 311 is increased.

By the opening degree of the first expansion valve 15 being reduced, the pressure of the refrigerant passing through the first expansion valve 15 reduces and the pressure of the refrigerant flowing into the service unit 30 reduces. That is, when the opening degree of the first expansion valve 15 is reduced, the flow rate and the pressure of the refrigerant passing through the first expansion valve 15 reduce and the degree of superheating at the usage-side heat exchanger 32 increases, whereby the opening degree of the valve body 311 is increased. In other words, the usage-side expansion valve 31 is disposed so that its opening degree is increased in response to a reduction in the flow rate or the pressure of the refrigerant flowing through the first expansion valve 15.

On the other hand, when the flow rate of the refrigerant flowing into the service unit 30 increases, the flow rate of the refrigerant passing through the valve body 311 increases. In relation thereto, the degree of superheating at the usage-side heat exchanger 32 reduces. In response thereto, the opening degree of the valve body 311 is reduced. Here, the flow rate of the refrigerant flowing into the service unit 30 increases in response to an increase in the flow rate of the refrigerant passing through the first expansion valve 15 (that is, an increase in the opening degree of the first expansion valve 15). Furthermore, by the opening degree of the first expansion valve 15 being increased, the pressure of the refrigerant passing through the first expansion valve 15 increases, and the pressure of the refrigerant flowing into the service unit 30 increases. That is, by the opening degree of the first expansion valve 15 being increased, the flow rate and the pressure of the refrigerant flowing into the service unit 30 increase. In relation thereto, the degree of superheating at the usage-side heat exchanger 32 reduces, whereby the opening degree of the valve body 311 is reduced.

In this manner, the usage-side expansion valve 31 has its opening degree changed in direct response to an increase or reduction in the degree of superheating of the refrigerant flowing out from the usage-side heat exchanger 32 (that is, an increase or reduction in the flow rate of the refrigerant flowing into the service unit 30). From a broad view, it can be regarded that the usage-side expansion valve 31 has its opening degree changed in response to an increase or reduction in the pressure of the refrigerant flowing into the service unit 30. That is, the opening degree of the usage-side expansion valve 31 is changed in response to an increase or reduction in the opening degree of the first expansion valve 15.

Note that, because of its structure, the opening degree of the usage-side expansion valve 31 is not immediately changed upon a change in the opening degree of the first expansion valve 15. An increase or reduction in the degree of superheating at the usage-side heat exchanger 32 takes place in response to a change in the opening degree of the first expansion valve 15, and the feeler bulb 312 detects that change in the degree of superheating. Then, the opening degree of the usage-side expansion valve 31 is changed. That is, the opening degree of the usage-side expansion valve 31 is changed with a delay corresponding to a predetermined response time for a change in the opening degree of the first expansion valve 15. This response time varies depending on the configuration of the usage-side expansion valve 31, the length of the refrigerant pipes, the capacity of the usage-side heat exchanger 32, the airflow volume of the usage-side fan 35, and/or the type of the refrigerant, and the like.

### (4) Details of controller 50

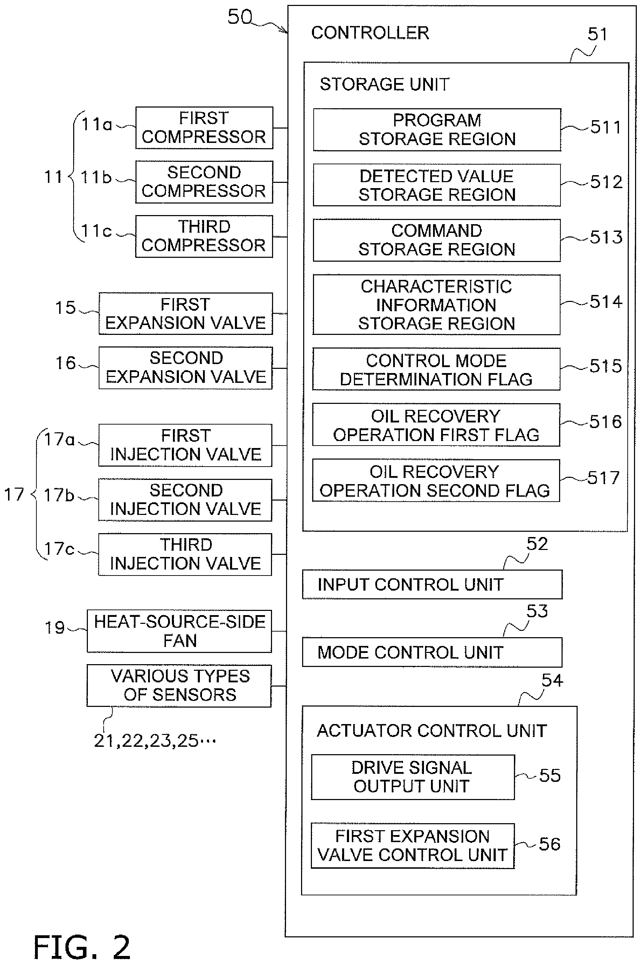

FIG. 2 is a block diagram schematically showing the schematic configuration of the controller 50 and units connected to the controller 50.

The controller 50 has a plurality of control modes, and controls the operation of the refrigeration apparatus 100 corresponding to the current control mode. For example, the controller 50 has, as the control modes, a normal mode in a normal operation, and an oil recovery control mode to which the controller 50 transitions from the normal mode when an oil recovery operation start condition (described later) is satisfied.

The controller 50 is electrically connected to actuators included in the heat source unit 10 (specifically, the compressors 11, the first expansion valve 15, the second expansion valve 16, the injection valves 17, the heat-source-side fan 19 and the like), and various types of sensors (the low-pressure side pressure sensor 21, the high-pressure side pressure sensor 22, the intermediate pressure sensor 23, the discharge temperature sensors 25 and the like). The controller 50 is further electrically connected to a command input apparatus such as a remote controller, which is not shown. Note that, in the present embodiment, the controller 50 is not electrically connected to the elements disposed in the service unit 30.

The controller 50 mainly includes a storage unit 51, an input control unit 52, a mode control unit 53, and an actuator control unit 54. Note that, these units in the controller 50 are implemented by the elements forming the controller 50 (a CPU, various types of memory, a communication module, various types of interfaces, various types of electric components and the like) organically functioning.

### (4-1) Storage unit 51

The storage unit 51 is formed of, for example, various types of memory such as, for example, ROM, RAM, and/or flash memory, and includes a plurality of storage regions. For example, the storage unit 51 includes a program storage region 511 for storing a control program in which processes at the units of the controller 50 are defined.

The storage unit 51 further includes a detected value storage region 512 for storing detected values from various types of sensors, and a command storage region 513 for storing any input command.

The storage unit 51 further includes a characteristic information storage region 514 for storing the characteristic of the usage-side expansion valve 31. The characteristic information storage region 514 stores, for example, information (usage-side expansion valve characteristic information) on the opening degree characteristic of the usage-side expansion valve 31 (the correlation between the degree of superheating of a refrigerant flowing out from the usage-side heat exchanger 32 or the opening degree of the first expansion valve 15 and the opening degree of the usage-side expansion valve 31) and the response characteristic (for example, the response time of the usage-side expansion valve 31 to a change in the opening degree of the first expansion valve 15).

The storage unit 51 is provided with a plurality of flags having predetermined number of bits. For example, the storage unit 51 is provided with a control mode determination flag 515 with which the current control mode of the controller 50 is determined. The control mode determination flag 515 includes the number of bits corresponding to the number of the control modes, and sets a bit corresponding to the current control mode. This allows the units to determine the current control mode.

The storage unit 51 is further provided with an oil recovery operation first flag 516 for determining whether or not a start execution condition on an oil recovery operation (an oil recovery operation start condition) for recovering the refrigerating machine oil from the service units 30 to the compressors 11 is satisfied (that is, whether or not to execute the oil recovery operation). The oil recovery operation first flag 516 is set when the oil recovery operation start condition is satisfied.

The storage unit 51 is further provided with an oil recovery operation second flag 517 for determining whether or not an oil recovery first control (described later) in the oil recovery operation has been completed and a start execution condition (a second control start condition) for an oil recovery second control (described later) is satisfied (that is, whether or not to execute the oil recovery second control). The oil recovery operation second flag 517 is set when the second control start condition is satisfied.

### (4-2) Input control unit 52

The input control unit 52 is a functional unit that functions as an interface for accepting signals from any elements connected to the controller 50. For example, the input control unit 52 receives a signal corresponding to a detection result output from any of the various types of sensors (21-23, 25 and the like), attaches predetermined identification data thereto and stores the same individually in the detected value storage region 512. For example, the input control unit 52 receives a signal from a command input apparatus which is not shown, and stores the same individually in the command storage region 513.

### (4-3) Mode control unit 53

The mode control unit 53 is a functional unit that switches the control mode. When the oil recovery operation start condition is satisfied in the normal mode, the mode control unit 53 sets the oil recovery operation first flag 516. Thus, the control mode transitions to the oil recovery control mode, and the oil recovery first control (described later) is executed.

The oil recovery operation start condition is a condition satisfied by the refrigerating machine oil being built up in the service units 30 (in particular, the usage-side heat exchangers 32). For example, the oil recovery operation start condition is satisfied by a lapse of a predetermined time (the time indicating that the refrigerating machine oil has built up in the service units 30) in a cooling operation. Furthermore, for example, the oil recovery operation start condition is satisfied by, in a cooling operation, any detected value of various types of sensors (21, 22, 23, or 25) attaining a predetermined reference value (a value indicating that the refrigerating machine oil has built up in the service units 30).

When the mode control unit 53 is in the oil recovery control mode, by a predetermined second control start condition being satisfied, the mode control unit 53 sets the oil recovery operation second flag 517. This ends the oil recovery first control in the oil recovery operation, and starts the oil recovery second control (described later).

The second control start condition is a condition satisfied by the oil recovery first control being completed. Specifically, the second control start condition is a condition satisfied by the opening degree of the usage-side expansion valve 31 being increased in response to the first expansion valve 15 set to a first opening degree under the oil recovery first control which will be described later. In the present embodiment, the oil recovery operation end condition is satisfied by, in the oil recovery first control of the oil recovery operation, a lapse of a predetermined time (a predetermined first time t1 indicating that the opening degree of the usage-side expansion valve 31 has attained a maximum opening degree). The first time t1 is a time which is necessary for the opening degree of the usage-side expansion valve 31 to be increased, by the oil recovery first control, in response to a reduction in the flow rate or the pressure of a refrigerant passing through the first expansion valve 15. The first time t1 is set on the basis of the usage-side expansion valve characteristic information. In the present embodiment, the first time t1 is set to three minutes.

When the mode control unit 53 is in the oil recovery control mode, the mode control unit 53 clears the oil recovery operation first flag 516 and the oil recovery operation second flag 517 by a predetermined oil recovery operation end condition being satisfied. This ends the oil recovery operation.

The oil recovery operation end condition is a condition satisfied by the recovery of the refrigerating machine oil in the service units 30 (particularly the usage-side heat exchangers 32) to the compressors 11 being completed. In the present embodiment, the oil recovery operation end condition is satisfied by, in the oil recovery second control which will be described later, a lapse of a predetermined time (a second time t2). The second time t2 is a time which is necessary for the increased opening degree of the usage-side expansion valve 31 to be reduced, by the oil recovery second control, to cause the liquid refrigerant to become less prone to flow into the usage-side heat exchanger 32. The second time t2 is set on the basis of the usage-side expansion valve characteristic information. In the present embodiment, the second time t2 is set to three minutes.

The mode control unit 53 switches the control mode to the normal mode, unless the control mode is in the oil recovery control mode.

### (4-4) Actuator control unit 54

The actuator control unit 54 controls, as circumstances demand in accordance with the control program, the operation of the actuators included in the refrigeration apparatus 100 (the heat source unit 10 and the service units 30). For example, the actuator control unit 54 controls, in real time, the number of revolutions of the compressors 11, the number of revolutions of the heat-source-side fan 19 and the usage-side fans 35, the opening degree of the first expansion valve 15, the opening degree of the second expansion valve 16, and the opening degree of the usage-side expansion valves 31 in accordance with the set temperature, the type of commands, the magnitude of the cooling load, the detected values of the sensors (21, 22, 23, 25) and the like.

The actuator control unit 54 includes a plurality of functional units. For example, the actuator control unit 54 includes a drive signal output unit 55 and a first expansion valve control unit 56.

### (4-4-1) Drive signal output unit 55

The drive signal output unit 55 is a functional unit that outputs a predetermined drive signal (drive voltage) to the actuators (11a to 11c, 15, 16, 17a to 17c, 19 and the like). The drive signal output unit 55 includes a plurality of inverters (not shown), and outputs a drive signal via a corresponding one of the inverters to the first compressor 11a or the heat-source-side fan 19.

### (4-4-2) First expansion valve control unit 56

The first expansion valve control unit 56 is a functional unit that controls the opening degree of the first expansion valve 15. The first expansion valve control unit 56 controls, in real time, the opening degree according to the control program and the set temperature, load and the like of the service units 30 when none of the oil recovery operation first flag 516 and the oil recovery operation second flag 517 are set (that is, when the control mode is in the normal mode).

When the oil recovery operation first flag 516 is set (that is, when the control mode is the oil recovery control mode), the first expansion valve control unit 56 executes the oil recovery first control. The oil recovery first control is control for increasing the opening degree of the usage-side expansion valve 31. In the oil recovery first control, the first expansion valve control unit 56 set the opening degree of the first expansion valve 15 to a first opening degree.

The first opening degree is smaller than an opening degree of the first expansion valve 15 in the normal mode. When the first expansion valve 15 is set to the first opening degree, the flow rate and the pressure of a refrigerant passing through the first expansion valve 15 reduce and the flow rate and the pressure of the refrigerant passing through the first expansion valve 15 and flowing into the service unit 30 reduce, whereby the degree of superheating at the usage-side heat exchanger 32 increases. In accordance therewith, the opening degree of the usage-side expansion valve 31 is increased. In the present embodiment, the first opening degree is set to a minimum opening degree such that the opening degree of the usage-side expansion valve 31 attains a maximum opening degree by the oil recovery first control. In other words, the first opening degree is an opening degree that causes the opening degree of the usage-side expansion valve 31 to be increased in relation to a reduction in the flow rate or pressure of the refrigerant passing through the first expansion valve 15.

When the oil recovery operation second flag 517 is set (that is, when the oil recovery first control has been completed), the first expansion valve control unit 56 executes the oil recovery second control. The oil recovery second control is control for sending a liquid refrigerant for compatibilizing with the refrigerating machine oil to the usage-side heat exchanger 32. In the oil recovery second control, the first expansion valve control unit 56 sets the opening degree of the first expansion valve 15 to a second opening degree.

The second opening degree is greater than the opening degree of the first expansion valve 15 in the oil recovery first control. When the first expansion valve 15 is set to the second opening degree, the flow rate and the pressure of the refrigerant passing through the first expansion valve 15 increase and the flow rate and the pressure of the refrigerant passing through the first expansion valve 15 and flowing into the service unit 30 increase, whereby the degree of superheating at the usage-side heat exchanger 32 reduces. In accordance therewith, the opening degree of the usage-side expansion valve 31 is reduced.

Here, the opening degree of the usage-side expansion valve 31 changes by a delay corresponding to the response time, in response to the change in the opening degree of the first expansion valve 15. That is, until that response time elapses since when the first expansion valve 15 is switched from the first opening degree to the second opening degree, the opening degree of the usage-side expansion valve 31 is maintained at the opening degree which has been increased by the oil recovery first control. Therefore, until the response time elapses since when the first expansion valve 15 is switched from the first opening degree to the second opening degree by the oil recovery second control, a liquid refrigerant or a gas-liquid two-phase refrigerant having passed through the first expansion valve 15 is sent to the usage-side heat exchanger 32 via the usage-side expansion valve 31. The liquid refrigerant or the gas-liquid two-phase refrigerant is compatibilized with a refrigerating machine oil built up in the usage-side heat exchanger 32, and flows toward the gas side (the first pipe P1) of the heat source unit 10. Thus, the refrigerating machine oil built up in the usage-side heat exchanger 32 is recovered to the compressors 11.

In the present embodiment, the second opening degree of the first expansion valve 15 is set to the maximum opening degree so as to facilitate sending the liquid refrigerant or the gas-liquid two-phase refrigerant to the usage-side heat exchanger 32 by the oil recovery second control. It can be regarded that the second opening degree is an opening degree that allows, before the opening degree of the usage-side expansion valve 31 is reduced in relation to an increase in the flow rate or the pressure of the refrigerant passing through the first expansion valve 15, a liquid refrigerant to flow into the usage-side heat exchanger 32 to be compatibilized with the refrigerating machine oil.

### (5) Flow of process at controller 50

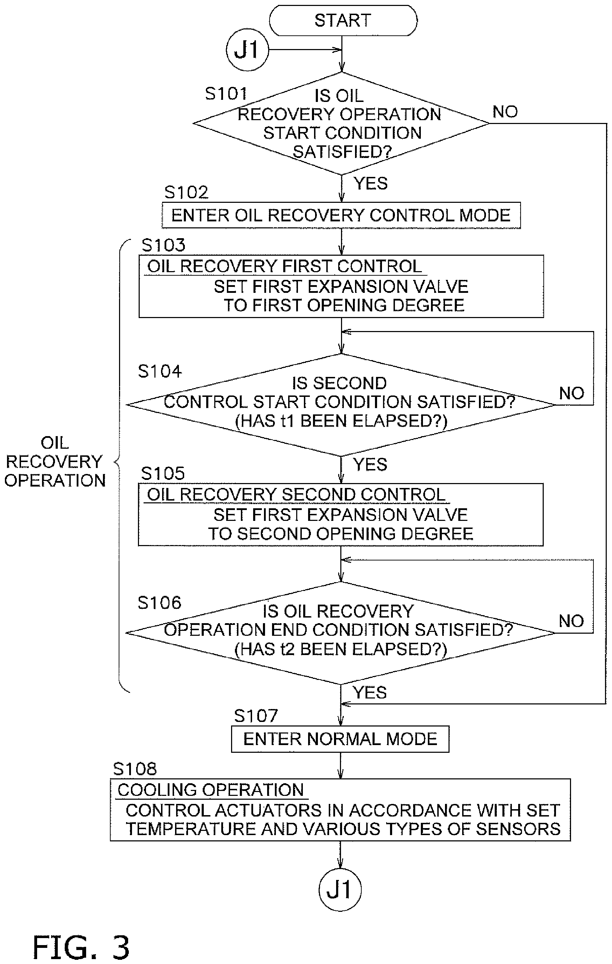

In the following, with reference to FIG. 3, a description will be given of an exemplary flow of a process at the controller 50. FIG. 3 is a flowchart showing an exemplary flow of processes at the controller 50.

When the controller 50 is turned on and receives an operation start command, the controller 50 carries out processes according to the flow from steps S101 to S108 shown in FIG. 3. In FIG. 3, steps S102 to S106 show a process relating to the oil recovery operation (the oil recovery control mode). Steps S107 to S108 show a process relating to the cooling operation (the normal mode). Note that, the process flow shown in FIG. 3 is merely of an exemplary nature, and may be changed as appropriate. For example, the order of the steps may be changed unless a contradiction arises. Part of the steps may be executed in parallel to other steps.

In step S101, when the oil recovery operation start condition is not satisfied (that is, when NO), the controller 50 proceeds to step S107. On the other hand, when the oil recovery operation start condition is satisfied (when YES), the controller 50 proceeds to step S102.

In step S102, the controller 50 enters the oil recovery control mode. Thereafter, the controller 50 proceeds to step S103.

In step S103, the controller 50 starts the oil recovery operation and executes the oil recovery first control. Specifically, the controller 50 sets, as the oil recovery first control, the first expansion valve 15 to the first opening degree. Thus, the flow rate and the pressure of a refrigerant passing through the first expansion valve 15 reduce and the flow rate and the pressure of the refrigerant having passed through the first expansion valve 15 and flowing into the service unit 30 reduce, whereby the degree of superheating at the usage-side heat exchanger 32 increases. In accordance therewith, the opening degree of the usage-side expansion valve 31 is increased (in the present embodiment, the opening degree is set to the maximum opening degree). Following the start of executing the oil recovery first control, the controller 50 proceeds to step S104.

In step S104, when the second control start condition is not satisfied (in the present embodiment, when the first time t1 has not elapsed since the start of executing the oil recovery first control, that is, when NO), the controller 50 stays at step S104. On the other hand, when the second control start condition is satisfied (in the present embodiment, when the first time t1 has elapsed since the start of executing the oil recovery first control, that is, when YES), the controller 50 proceeds to step S105.

In step S105, the controller 50 ends the oil recovery first control and executes the oil recovery second control. Specifically, the controller 50 sets, as the oil recovery second control, the first expansion valve 15 to the second opening degree. Thus, the flow rate and the pressure of a refrigerant passing through the first expansion valve 15 increase and the flow rate and the pressure of the refrigerant having passed through the first expansion valve 15 and flowing into the service unit 30 increase, whereby the degree of superheating at the usage-side heat exchanger 32 reduces. In accordance therewith, the opening degree of the usage-side expansion valve 31 is reduced. Note that, until a response time elapses since when the first expansion valve 15 is switched from the first opening degree to the second opening degree, the opening degree increased by the oil recovery first control (in the present embodiment, the maximum opening degree) is maintained. Hence, until the response time elapses since when the first expansion valve 15 is switched from the first opening degree to the second opening degree, a liquid refrigerant or a gas-liquid two-phase refrigerant passes through the first expansion valve 15, and the liquid refrigerant or the gas-liquid two-phase refrigerant flows into the usage-side heat exchanger 32. The liquid refrigerant or the gas-liquid two-phase refrigerant flowing into the usage-side heat exchanger 32 is compatibilized with a refrigerating machine oil built up in the usage-side heat exchanger 32, and flows toward the gas side (the first pipe P1 and the second pipe P2) of the heat source unit 10. Thus, the refrigerating machine oil built up in the usage-side heat exchanger 32 is recovered to the compressors 11. After the start of executing the oil recovery second control, the controller 50 proceeds to step S106.

In step S106, when the oil recovery operation end condition is not satisfied (in the present embodiment, when the second time t2 has not elapsed since the start of executing the oil recovery second control, that is, when NO), the controller 50 stays at step S106. On the other hand, when the oil recovery operation end condition is satisfied (in the present embodiment, when the second time t2 has elapsed since the start of executing the oil recovery second control, that is, when YES), the controller 50 proceeds to step S107.

In step S107, the controller 50 enters the normal mode. Thereafter, the controller 50 proceeds to step S108.

In step S108, the controller 50 controls in real time the state of the actuators (11, 15, 16, 17, 19) in accordance with the set temperature and the detected values of various types of sensors (20 to 23, 25) to cause them to perform the cooling operation. Thereafter, the controller 50 returns to step S101.

### (6) Oil recovery operation

As has been described above, the refrigeration apparatus 100 in operation performs the oil recovery operation for recovering the refrigerating machine oil built up in the service units 30 to the compressors 11 at a predetermined timing (specifically, at a timing when the oil recovery operation start condition is satisfied). In the oil recovery operation, the controller 50 successively executes the oil recovery first control and the oil recovery second control.

In the oil recovery first control, by the first expansion valve 15 having its opening degree reduced to the first opening degree, the flow rate and the pressure of a refrigerant passing through the first expansion valve 15 (that is, a refrigerant sent to the service units 30) reduces. In relation thereto, the flow rate and the pressure of a refrigerant passing through the usage-side expansion valve 31 reduce and the flow rate and the pressure of a refrigerant flowing into the usage-side heat exchanger 32 reduce. In accordance therewith, the degree of superheating of the refrigerant at the usage-side heat exchanger 32 increases. As a result, the opening degree of the usage-side expansion valve 31 is increased.

In the oil recovery second control, by the first expansion valve 15 having its opening degree increased to the second opening degree, the flow rate and the pressure of a refrigerant passing through the first expansion valve 15 increase. In relation thereto, the flow rate and the pressure of a refrigerant passing through the usage-side expansion valve 31 increase and the flow rate and the pressure of a refrigerant flowing into the usage-side heat exchanger 32 increase. In accordance therewith, the degree of superheating of the refrigerant at the usage-side heat exchanger 32 reduces. In response to the reduced degree, the opening degree of the usage-side expansion valve 31 is reduced. Here, the timing at which the opening degree of the usage-side expansion valve 31 is reduced is delayed by a predetermined response time from the timing where the first expansion valve is set to the second opening degree. That is, there exists a time lag corresponding to the response time of the usage-side expansion valve 31 between the timing where the first expansion valve 15 is set to the second opening degree and the opening degree of the usage-side expansion valve 31 is reduced.

Hence, during the period since when the first expansion valve 15 is set to the second opening degree until when the opening degree of the usage-side expansion valve 31 is reduced, the opening degree of the usage-side expansion valve 31 is maintained in the increased state by the oil recovery first control. On the other hand, the flow rate of the refrigerant sent to the usage-side expansion valve 31 increases by the first expansion valve 15 is controlled to the second opening degree. Therefore, until the opening degree of the usage-side expansion valve 31 is reduced, the liquid refrigerant flowed out from the receiver 13 is sent to the usage-side heat exchanger 32. This liquid refrigerant transfers the refrigerating machine oil built up in the usage-side heat exchanger 32 to the heat source unit 10, to be recovered to the compressors 11.

In the refrigeration apparatus 100, executing the oil recovery operation including the oil recovery first control and the oil recovery second control recovers the refrigerating machine oil built up in the usage-side heat exchanger 32 to the compressors 11, without the necessity of disposing an on-off valve on the refrigerant flow upstream side relative to the usage-side expansion valve 31.

### (7) Characteristic of refrigeration apparatus 100

### (7-1)

The refrigeration apparatus 100 according to the above-described embodiment is excellent in workability, maintainability, and economy.

That is, there exists a conventional refrigeration apparatus which includes an on-off valve disposed upstream to the mechanical expansion valve. By the on-off valve being turned on or off, a liquid refrigerant is sent to the usage-side heat exchanger, to perform an oil recovery operation of recovering a refrigerating machine oil built up in the usage-side heat exchanger at a predetermined timing. In the case where a controller for controlling actuators is to be disposed outside the service unit, such a conventional refrigeration apparatus necessitates an electric wire for electrically connecting between the on-off valve in the service unit and the controller in installation or maintenance. For the works relating to the electric wire, and troubles and costs in maintenance, the conventional refrigeration apparatus is poor in workability, maintainability, and economy.

In contrast, in the refrigeration apparatus 100, the controller 50 executes the oil recovery operation for recovering the refrigerating machine oil to the compressors 11 at a predetermined timing. In the oil recovery operation, the opening degree of the first expansion valve 15 is set to the first opening degree, to reduce the flow rate and the pressure of a refrigerant passing through the first expansion valve 15. Thereafter, the opening degree of the first expansion valve 15 is set to the second opening degree, to increase the flow rate and the pressure of the refrigerant passing through the first expansion valve 15. Thus, in the oil recovery operation, under the oil recovery first control, in relation to a reduction in the flow rate or the pressure of the refrigerant passing through the first expansion valve 15, the opening degree of the usage-side expansion valve 31 is increased. Thereafter, under the oil recovery second control, before the opening degree of the usage-side expansion valve 31 is reduced in relation to the increase in the flow rate or the pressure of the refrigerant passing through the first expansion valve 15, a liquid refrigerant flows into the usage-side heat exchanger 32. As a result, the liquid refrigerant flowing into the usage-side heat exchanger 32 is compatibilized with a refrigerating machine oil building up in the usage-side heat exchanger 32 and flows toward the heat source unit 10 side. Then, the refrigerating machine oil is recovered to the compressors 11.

That is, in the refrigeration apparatus 100, the oil recovery operation of recovering a refrigerating machine oil in the service units 30 to the compressors 11 is carried out without the necessity of disposing an on-off valve for the oil recovery operation in the service units 30 (or in a refrigerant flow path downstream to the heat source unit 10 and upstream to the usage-side expansion valve 31; in the present embodiment, the liquid-side connection pipe L1, the same holds true for the following). In other words, in the refrigeration apparatus 100, the refrigerant circuit RC including the usage-side expansion valve 31 upstream to the usage-side heat exchanger 32 performing the oil recovery operation does not require an on-off valve disposed upstream to the usage-side expansion valve 31. Hence, the refrigeration apparatus 100 can dispense with an electric wire for electrically connecting between the controller 50 and such an on-off valve in installation and maintenance and, accordingly, the refrigeration apparatus 100 can save any works relating to the electric wire and troubles and costs in maintenance. Thus, the refrigeration apparatus 100 is excellent in workability, maintainability, and economy.

### (7-2)

In the refrigeration apparatus 100 according to the above-described embodiment, the controller 50 first executes the oil recovery first control, and after a lapse of the first time t1, the controller 50 executes the oil recovery second control. The first time t1 in the embodiment is a time that is required for the usage-side expansion valve 31 to have its opening degree increased in response to a reduction in the flow rate or the pressure of a refrigerant passing through the first expansion valve 15 by the oil recovery first control.

Thus, after the opening degree of the usage-side expansion valve 31 is increased by the oil recovery first control being executed, the opening degree of the first expansion valve 15 is increased by the oil recovery second control, whereby a liquid refrigerant by a flow rate suitable for recovering a refrigerating machine oil flows into the usage-side heat exchanger 32. As a result, the oil recovery operation is realized without the necessity of disposing an on-off valve for an oil recovery operation in the service units 30. Thus, any electric wire for electrically connecting between the controller 50 and such an on-off valve in installation or maintenance can be dispensed with and, accordingly, the refrigeration apparatus 100 can save any works relating to the electric wire and troubles and costs in maintenance.

### (7-3)

In the refrigeration apparatus 100 according to the above-described embodiment, the usage-side expansion valve 31 includes the feeler bulb 312 disposed on the refrigerant flow downstream side relative to the usage-side heat exchanger 32, and the opening degree of the usage-side expansion valve 31 is changed in response to the detected temperature by the feeler bulb 312.

Thus, using the characteristic of the usage-side expansion valve 31 including the feeler bulb 312, a liquid refrigerant is sent to the usage-side heat exchanger 32 to recover a refrigerating machine oil. That is, the opening degree of the usage-side expansion valve 31 is not immediately changed in response to a change in the flow rate of a refrigerant sent from the upstream side (that is, a change in the opening degree of the first expansion valve 15). Instead, the opening degree is changed by a delay corresponding to a response time in response to a change in the flow rate of a refrigerant sent from the upstream side. In other words, the usage-side expansion valve 31 is characterized by its low-speed responsivity. By virtue of this characteristic, when the oil recovery second control is executed following the oil recovery first control, the opening degree of the usage-side expansion valve 31 is not immediately reduced. Hence, after the first expansion valve 15 is set to the second opening degree by the oil recovery second control and until the usage-side expansion valve 31 has its opening degree reduced in response thereto, a liquid refrigerant is allowed to flow in by a flow rate suitable for recovering a refrigerating machine oil to the usage-side heat exchanger 32.

### (7-4)

In the refrigeration apparatus 100 according to the above-described embodiment, the first expansion valve 15 is disposed in the heat source unit 10. This eliminates the necessity of providing an electric wire for electrically connecting between the heat source unit 10 and the service unit 30 disposed separate from each other. This particularly minimizes works and costs relating to installation or maintenance.

### (7-5)

In the refrigeration apparatus 100 according to the above-described embodiment, the controller 50 is disposed at the heat source unit 10, and not electrically connected to any element disposed at the service unit 30. This eliminates the necessity of providing an electric wire for electrically connecting between the heat source unit 10 and the service unit 30 disposed separate from each other. This particularly minimizes works and costs relating to installation or maintenance.

### (7-6)

In the refrigeration apparatus 100 according to the above-described embodiment, the refrigerant circuit RC includes a plurality of service units 30. That is, even in the case where a plurality of service units 30 are installed (that is, in the case where electric wires are required for electrically connecting between the heat source unit 10 and the service units 30, which involves particularly complicated installation works or maintenance works), the refrigeration apparatus 100 can dispense with any electric wires required by an on-off valve for the oil recovery operation installed in each of the service units 30. This particularly minimizes works and costs relating to installation or maintenance.

### (8) Variations

The above-described embodiment can be modified as appropriate as shown in the following variations. Note that, the variations may be carried out in combination with other variation unless any contradiction arises.

### (8-1) Variation A

In the above-described embodiment, the second control start condition in the oil recovery operation is satisfied by a lapse of the first time t1 in the oil recovery first control. Note that, so long as the second control start condition is a condition which is satisfied by the opening degree of the usage-side expansion valve 31 being increased in response to the oil recovery first control, the second control start condition can be changed as appropriate in accordance with the design specification or the installation environment. For example, the second control start condition may be satisfied by a detected value by any of various types of sensors (21, 22, 23, or 25) attaining a predetermined reference value (a value indicating an increase in the opening degree of the usage-side expansion valve 31) in the oil recovery first control.

### (8-2) Variation B

In the above-described embodiment, the oil recovery operation end condition in the oil recovery operation is satisfied by a lapse of the second time t2 in the oil recovery second control. Note that, so long as the oil recovery operation end condition is a condition which is satisfied by the recovery of a refrigerating machine oil built up in the service unit 30 (particularly, the usage-side heat exchanger 32) being completed, the oil recovery operation end condition can be changed as appropriate in accordance with the design specification or the installation environment. For example, the oil recovery operation end condition may be satisfied by a detected value by any of various types of sensors (21, 22, 23, or 25) attaining a predetermined reference value (a value indicating the complete of recovery of a refrigerating machine oil built up in the service unit 30) in the oil recovery second control.

### (8-3) Variation C

In the above-described embodiment, the first time t1 and the second time t2 are set to three minutes. Note that, the first time t1 and the second time t2 can be changed as appropriate in accordance with the installation environment and the design specification. For example, the first time t1 or the second time t2 may be set to a value less than three minutes (for example, one minute), or a value greater than three minutes (for example, five minutes). Furthermore, the first time t1 and the second time t2 may not be set to an identical value, and may be respectively set to different values.

### (8-4) Variation D

In the above-described embodiment, the description has been given of the oil recovery first control under which the first expansion valve 15 has its opening degree set to a minimum opening degree as the first opening degree such that the usage-side expansion valve 31 has its opening degree set to a maximum opening degree. Note that, the first opening degree is just an opening degree smaller than an opening degree of the first expansion valve 15 in the normal mode, and may not be a minimum opening degree so long as it increases the opening degree of the usage-side expansion valve 31.

Further, in the oil recovery second control, the description has been given of the first expansion valve 15 having its opening degree set to a maximum opening degree as the second opening degree. Note that, the first opening degree is just an opening degree greater than the second opening degree, and may not be a maximum opening degree so long as it allows a liquid refrigerant to flow into the usage-side heat exchanger 32.

That is, so long as the object of the oil recovery first control and the oil recovery second control is achieved, the first opening degree and the second opening degree should be set as appropriate in accordance with the design specification and the installation environment.

### (8-5) Variation E

In the above-described embodiment, the oil recovery operation is performed when the oil recovery operation start condition is satisfied in the cooling operation. Note that, the trigger of the oil recovery operation is not limited thereto, and may be changed as appropriate. For example, the oil recovery operation may be performed when the user inputs a predetermined command instructing the start of the oil recovery operation.

### (8-6) Variation F

The configuration of the refrigerant circuit RC in the above-described embodiment is not limited to the configuration shown in FIG. 1, and may be changed as appropriate according to the design specification and the installation environment.

For example, the first expansion valve 15 may not be disposed in the heat source unit 10. For example, the first expansion valve 15 may be disposed at the liquid-side connection pipe L1.

For example, while three compressors 11 in total are disposed, the number of the compressors 11 may be changed as appropriate in accordance with the design specification. For example, the compressors 11 may be two in number, or four or more in number. In such cases, the number and allocation of the variable-capacity compressor and the constant-capacity compressor should be selected as appropriate.

For example, the subcooling heat exchanger 14 and the injection line J1 are not essential, and may be omitted as appropriate.

### (8-7) Variation G

In the above-described embodiment, the usage-side expansion valve 31 is a thermostatic expansion valve including the feeler bulb 312. Note that, so long as the usage-side expansion valve 31 is an automatic regulating valve whose opening degree changes in response to a change in the flow rate or the pressure of the refrigerant sent from the upstream side, the usage-side expansion valve 31 may not be a thermostatic expansion valve and may be other mechanical expansion valve.

### (8-8) Variation H

In the above-described embodiment, the usage-side fan 35 is not connected to the controller 50. Note that, the usage-side fan 35 may be electrically connected to the controller 50, and may have its start, stop or number of revolutions controlled by the controller 50. The usage-side fan 35 may not be supplied with power from an independent power source (a commercial power source, a storage battery or the like), and may be supplied with drive power from a power source unit shared with the heat source unit 10.

### (8-9) Variation I

The above-described embodiment includes one heat source unit 10 and two service units 30. Note that, the number of the heat source unit 10 disposed in the refrigeration apparatus 100 is not limited, and may be two or more. The number of the service units 30 in the refrigeration apparatus 100 is not limited, and may be one, or three or more.

### (8-10) Variation J

In the above-described embodiment, the controller 50 is disposed at the heat source unit 10. Note that, the controller 50 may not be disposed at the heat source unit 10. For example, the controller 50 may be disposed at any unit other than the heat source unit 10, or may be disposed independently. In such cases, the controller 50 may be disposed at a remote location connected to the heat source unit 10 via a communication network.

The configuration of the controller 50 is not limited to the configuration in the above-described embodiment, and may be changed as appropriate in accordance with the design specification or the installation environment. For example, the elements (the CPU, the memory, and various types of electric components) forming the controller 50 may not be disposed at an identical position. The elements disposed in dispersed locations may be connected to each other via a communication network to form the controller 50. That is, so long as the elements forming the controller 50 are configurable, the configuration of the controller 50 is not limited.

### (8-11) Variation K

In the above-described embodiment, the present invention is applied to the refrigeration apparatus 100 that cools a low-temperature warehouse, the inside of a showcase at a shop, or the usage-side space in the transfer container. Without being limited thereto, the present invention is applicable to other refrigeration apparatus including a refrigerant circuit. For example, the present invention may be applied to an air conditioning system (an air conditioner) that realizes air conditioning by cooling the space inside a building.

### INDUSTRIAL APPLICABILITY

The present invention is applicable to a refrigeration apparatus including a refrigerant circuit.

### REFERENCE SIGNS LIST

- 10:: heat source unit
- 11:: compressor (actuator)
- 12:: heat-source-side heat exchanger
- 13:: receiver
- 14:: subcooling heat exchanger
- 15:: first expansion valve (electric valve, actuator)
- 16:: second expansion valve (actuator)
- 17:: injection valve
- 19:: heat-source-side fan (actuator)
- 21:: low-pressure side pressure sensor
- 22:: high-pressure side pressure sensor
- 23:: intermediate pressure sensor
- 25:: discharge temperature sensor
- 30:: service unit
- 31:: usage-side expansion valve (mechanical expansion valve)
- 32:: usage-side heat exchanger
- 35:: usage-side fan
- 50:: controller
- 51:: storage unit
- 52:: input control unit
- 53:: mode control unit
- 54:: actuator control unit
- 55:: drive signal output unit
- 56:: first expansion valve control unit
- 100:: refrigeration apparatus
- 141:: first flow path
- 142:: second flow path
- 311:: valve body
- 312:: feeler bulb
- 313:: capillary tube
- G1:: gas-side connection pipe
- J1:: injection line
- L1:: liquid-side connection pipe
- P1 to P15:: first pipe - fifteenth pipe
- RC:: refrigerant circuit
- SV1:: gas-side shutoff valve
- SV2:: liquid-side shutoff valve
- t1:: first time (predetermined time)
- t2:: second time

### CITATION LIST

### PATENT LITERATURE

Patent Literature 1: JP 2009-257759 A

## Claims

1. A refrigeration apparatus (100) configured to carry out a refrigeration cycle through a refrigerant circuit (RC) including: a heat source unit (10) including a compressor (11) configured to compress a refrigerant and a heat-source-side heat exchanger (12) functioning as a condenser for the refrigerant; and a service unit (30) including a usage-side heat exchanger (32) functioning as an evaporator for the refrigerant, the refrigeration apparatus (100) comprising:
a mechanical expansion valve (31) disposed on a refrigerant flow upstream side relative to the usage-side heat exchanger and configured to decompress a refrigerant passing through the mechanical expansion valve (31) in accordance with an opening degree of the mechanical expansion valve (31);
an electric valve (15) disposed on the refrigerant flow upstream side relative to the mechanical expansion valve and configured to adjust a flow rate or a pressure of a refrigerant passing through the electric valve (15) in accordance with an opening degree of the electric valve (15); and
a controller (50) configured to control an operation of actuators (11, 15, 16, 17), wherein
the mechanical expansion valve has an opening degree changed in response to an increase and a reduction in a flow rate or a pressure of a refrigerant flowing upstream to the mechanical expansion valve,
the controller executes an oil recovery operation including a first control and a second control for recovering a refrigerating machine oil built up in the service unit to the compressor at a predetermined timing,
by the first control, the electric valve has an opening degree set to a predetermined first opening degree to reduce the flow rate or the pressure of the refrigerant passing through the electric valve,
by the second control, after the first control, the electric valve has an opening degree set to a second opening degree to increase the flow rate or the pressure of the refrigerant passing through the electric valve,
the first opening degree is an opening degree that causes the opening degree of the mechanical expansion valve to increase in relation to a reduction in the flow rate or the pressure of the refrigerant passing through the electric valve, and
the second opening degree is an opening degree that allows, before the opening degree of the mechanical expansion valve is reduced in relation to an increase in the flow rate or the pressure of the refrigerant passing through the electric valve, a liquid refrigerant to flow into the usage-side heat exchanger.

2. The refrigeration apparatus (100) according to claim 1, wherein the controller executes the first control, and executes the second control after a lapse of a predetermined time (t1) from execution of the first control.

3. The refrigeration apparatus (100) according to claim 1 or 2, wherein the mechanical expansion valve includes a feeler bulb disposed on a refrigerant flow downstream side relative to the usage-side heat exchanger, and has an opening degree changed in response to a detected temperature by the feeler bulb.

4. The refrigeration apparatus (100) according to any one of claims 1 to 3, wherein the electric valve is disposed in the heat source unit.

5. The refrigeration apparatus (100) according to any one of claims 1 to 4, wherein the controller is disposed at the heat source unit and not electrically connected to any element disposed at the service unit.

6. The refrigeration apparatus (100) according to any one of claims 1 to 5, wherein the refrigerant circuit includes a plurality of the service units.
